# EUROPEAN PATENT SPECIFICATION

(11) **EP 2 341 361 B1**
(45) Date of publication and mention of the grant of the patent: **29.10.2014**
(21) Application number: 10191177.4
(22) Date of filing: 15.11.2010
(51) Int. Cl.: G01S 5/14, G01S 11/06

(54) **Method and system for locating a hand-held terminal**
Verfahren und System zur Auffindung eines tragbaren Endgerätes
Procédé et système pour localiser un terminal portable

(30) Priority: 30.12.2009 US 650087
(43) Date of publication of application: 06.07.2011
(73) Proprietor: Psion Inc., Mississauga, ON L5N 7J9 (CA)
(72) Inventor: Attew, Vernon John, Missisauga, ON L5N 7J9 (CA)
(74) Representative: Treleven, Colin

(56) References cited:
- WO-A1-2008/143483
- WO-A2-01/94967
- WO-A2-2006/030422
- US-A1- 2007 075 873

## Description

The present invention relates to hand-held terminals and more specifically relates to a method and system for determining the location of a hand-held terminal.

In warehousing applications, knowing the whereabouts of an ID reader device, such as a hand-held terminal, when it scans a product can be very important. The classic solution for this issue involves barcoding or radio frequency identification (RFID) tagging key locations in the warehouse, and getting the operator of the hand-held terminal to scan one of these codes after scanning a product. This is a reasonably effective and cheap approach to the determination of the location of the hand-held terminal.

However, this approach can be time consuming and is subject to operator error and/or misuse. An alternative approach is to fit each hand-held terminal with a global positioning system (GPS) receiver. This is an expensive solution with many drawbacks including the loss of the satellite signal in any warehouse with a metal roof. An additional drawback is that the number of hand-held terminals, for example radio frequency identification (RFID) readers, on the market that are capable of accepting a GPS receiver card is also quite limited.

The use of RFID readers is becoming more popular, either instead of or in conjunction with a barcode reader, and as such a need exists for a system for and method of determining the location of an RFID reader, such as an RFID hand-held terminal.

WO 2008/143483 teaches a method for determining a location of an RFID reader by receiving signals from three or more "beacons" which transmit signals including the position of the respective beacon and signal intensity to distance information. As described in this reference at page 4, paragraph 20, these beacons employ radio technologies other than RFID (such as RF signals, Zigbee or Bluetooth signals) to communicate the beacon signals to the RFID reader. Thus the RFID reader requires an additional radio receiver to receive and process the beacon signals.

Further, the RFID reader processes the received beacon signals to measure the strength at which the beacon signals are received which is then combined with information included in the respective beacon signal to relate the signal strength to distance from that respective beacon. The need to determine the received signal strength can increase the complexity of the additional radio receiver and thus its cost and operating power requirements. The resulting determined distances for each respective beacon are then employed in a conventional triangulation method.

WO 2006/030422 teaches an RFID system which uses a distance measurement, determined by employing time of flight measurements, to reduce collisions between responding RFID tags.

Published US patent application 2007/075873 teaches an object location system which includes three or more anchors which broadcast identification and location information and a wireless communication apparatus which communicates with the anchors and determines its location by triangulating the signals from the anchors. The wireless communication apparatus can also include an RFID communication system, in addition to the system used to communicate with the anchors, to determine the presence of one or more objects equipped with RFID tags within the reading range of the RFID communication system.

WO-A2-01/94967 provides a locating and tracking system. Multiple 'marker tags' may have known locations. A radio frequency identification and radio frequency data communication device (RFID/RFDC) interrogates the marker tags, and receives signals from the marker tags. The RFID/RFDC device may send either the response signal from the closest marker tag or the identity of the closest marker tag to a host computer, from which information the location of the RFID/RFDC device is determined.

One aspect of the present invention provides a system that allows an RFID reader to determine its location using the RFID radio and without requiring that RFID radio to perform time of flight measurements or performing received signal strength versus distance calculations to determine that location.

In one aspect, the present invention provides a system for determining a location of an RFID reader. The system is as defined in claim 1. Preferred features are defined in the dependent claims and in the following description.

Preferably, each unique RFID pseudo tag signal in the sequence has a progressively weaker signal and therefore a progressively shorter range of transmission such that the number of unique RFID pseudo tag signals received by the RFID reader is inversely proportional to its distance from the transmitter.

The system has at least three transmitters, and the location calculator preferably triangulates the location of the RFID reader based on the range of transmission indicated in the tag identification and the location of the transmitter in the transmitter identification value.

Preferably, the location calculation is performed in the RFID reader.

Preferably, the RFID reader notifies a user once the location calculator has successfully calculated the location of the RFID reader.

Preferably, the location calculator comprises an algorithm for applying a greater weight to the unique pseudo RFID tag signals having a shorter range of transmission relative to pseudo RFID tag signals received from transmitters having a longer range.

Preferably, the location calculator comprises an algorithm for accumulating location information over time using a rolling average to generate a locational history and substantially determining what a current location of the RFID reader is based on the locational history.

Preferably, the system has at least four transmitters, and triangulation calculations are performed to determine the location of the RFID reader based on the tag identifications and the transmitter identification values.

Preferably, the location calculator is located in a server computer and the tag identification and the transmitter identification value of received pseudo tag signals are transmitted from the RFID reader to the location calculator in the server computer.

According to another aspect of the present invention, there is provided a method of determining the location of an RFID reader, the method being as defined in claim 10.

Preferably, each unique RFID pseudo tag in the sequence has a progressively weaker signal and therefore a progressively decreased range of transmission such that the number of unique RFID pseudo tag signals received by the RFID reader is inversely proportional to its distance from the source.

Preferably, the method further comprises discarding any tag identifications received by the RFID reader which have the same transmitter identification value and a tag identification indicating a range of transmission higher than a minimum received by the RFID reader resulting in a minimum range tag identification for each source; and wherein the calculating comprises calculating the location of the RFID reader based on the minimum range tag identification for each source and the transmitter identification value for each minimum range tag identification.

Preferably, the method further comprises: calculating the location of the RFID reader by triangulation of the RFID reader based on the range of transmission indicated in the tag identification and the location of the source in the transmitter identification value in the unique RFID pseudo tags.

Preferably, the location is calculated in the RFID reader.

Preferably, the method further comprises: notifying a user once the location of the RFID reader has been successfully calculated.

Preferably, the method further comprises: applying a greater weight to RFID pseudo tags received by the RFID reader from sources which are closer in distance to the RFID reader.

Preferably, the method further comprises: accumulating location information over time, using a rolling average, to generate a locational history; and determining what a current location of the RFID reader is based on: the range of transmission indicated in the tag identification and the location of the source from which each pseudo tag signal was transmitted obtainable from the transmitter identification value in the unique RFID pseudo tags received by the RFID reader; and the locational history.

Preferably, a server calculates the location of the RFID reader and the method further comprises: transmitting a signal from the server to the RFID reader upon successful calculation of the location of the RFID reader; and notifying the user upon receipt of the signal indicating a successful calculation.

While the invention is described below in conjunction with representative specific embodiments, it will be understood that it is not intended to limit the invention to the described embodiments. On the contrary, it is intended to cover alternatives, modifications, and equivalents as may be included within the scope of the invention as defined by the appended claims. In the following description, numerous specific details are set forth in order to provide a thorough understanding of the present invention. The present invention may be practiced without some or all of these specific details.

The description of the present invention has been presented for purposes of illustration and description, but is not intended to be exhaustive or limited to the invention in the form disclosed..

The term "radio-frequency identification tag" or "RFID tag" is intended to describe an object applied to, or incorporated into, an object for identifying and tracking purpose using radio waves. RFID tags generally include an integrated circuit for storing and processing information, a circuit for modulating and demodulating an RF signal, and an antenna for receiving and transmitting the signal. RFID tags can include a power source, typically referred to as an "active RFID tag", or can be parasitically powered, via energy transmitted from an RFID reader, typically referred to as a "passive RFID tag".

The term "radio-frequency identification reader" or "RFID reader" or "reader" or "interrogator" is intended to describe a device for remotely retrieving data stored in RFID tags.

The terms "pseudo tag" and "pseudo RFID" as used in this patent disclosure are intended to describe a simulated RFID tag which is capable of transmitting an RF signal to an RFID reader. This signal is used by the RFID reader in determining the present location of the RFID reader. Accordingly, the terms "real tag" and "real RFID" are used in this patent disclosure to describe an RFID tag which is used for the purpose of identifying and tracking an object.

The term "tag signal" and the variations thereof such as "real tag signal" and "pseudo tag signal" are intended to describe the signal transmitted by the respective real and pseudo RFID tags.

The terms "triangulation" and/or "trilateration" are intended to describe a process for determining location of a receiver by measuring or calculating the distance between the receiver and other known locations.

Exemplary embodiments of the invention will now be described with reference to the appended drawings, wherein:
Figure 1 shows a block diagram of a system in accordance with an embodiment of the present invention;
Figure 2A shows a block diagram of a transmitter used in the system of Figure 1;
Figure 2B shows a block diagram of a pseudo tag used in the system of Figure 1;
Figure 3 shows a schematic representation of a transmitter transmitting a plurality of pseudo tag signals with different signal strengths;
Figure 4 shows a flow chart of a method of determining the location of an RFID reader in accordance with the present invention; and
Figure 5 illustrates an example of an increasing granularity to locate the RFID reader in accordance with the present invention.

Embodiments of the present invention provide a system for and method of determining the location of an RFID reader, including mobile and hand held RFID readers, using pseudo tags, that transmit pseudo signals from known locations, for example, fixed locations.

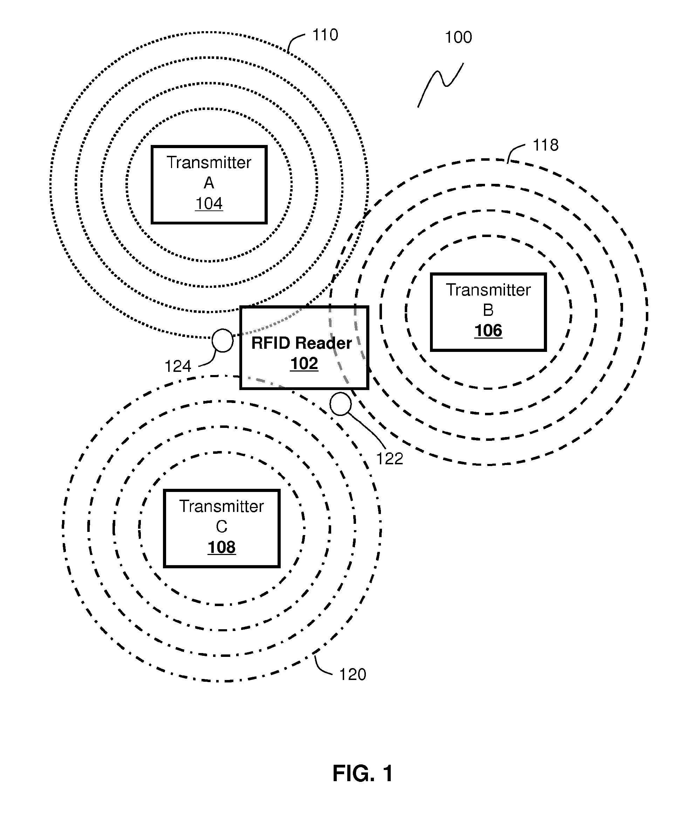

A system for determining the location of an RFID reader, according to one embodiment of the present invention, is indicated generally at 100 in Figure 1. The system 100 includes an RFID reader 102 for receiving RFID tag signals transmitted by both real and pseudo RFID tags, and transmitters 104, 106 and 108. The transmitters 104, 106 and 108 are at known reference locations, and each transmitter 104, 106 and 108 transmits a sequence 110, 118 and 120 of unique RFID pseudo tag signals respectively.

Preferably, the known reference locations are at fixed locations. However, it will be apparent to a person skilled in the art that the location of RFID 102 reader can also be determined through trilateration or triangulation if the spatial variation of the known reference points can be determined by the RFID reader 102.

Real RFID tags, such as those used for object tracking or other purposes, and which can be read with RFID reader 102 are represented in Figure 1 by real RFID tags 122 and 124. As will be apparent those of skill in the art, system 100 is not limited to use with only two real RFID tags, and fewer or more real RFID tags (and indeed, changing numbers of real RFID tags) may be present and read within system 100.

Each sequence 110, 118, 120 of pseudo tag signals comprises at least two pseudo tag signals each comprising at least a transmitter identification value, indicating which transmitter the pseudo tag signal was transmitted from, and a tag identification (ID) indicating the power with which the specific pseudo tag signal of the sequence was transmitted. Thus, each sequence 110, 118, 120 is uniquely identifiable by the RFID reader 102. Preferably, the tag ID will correspond proportionally to the power with which the pseudo tag signal is transmitted.

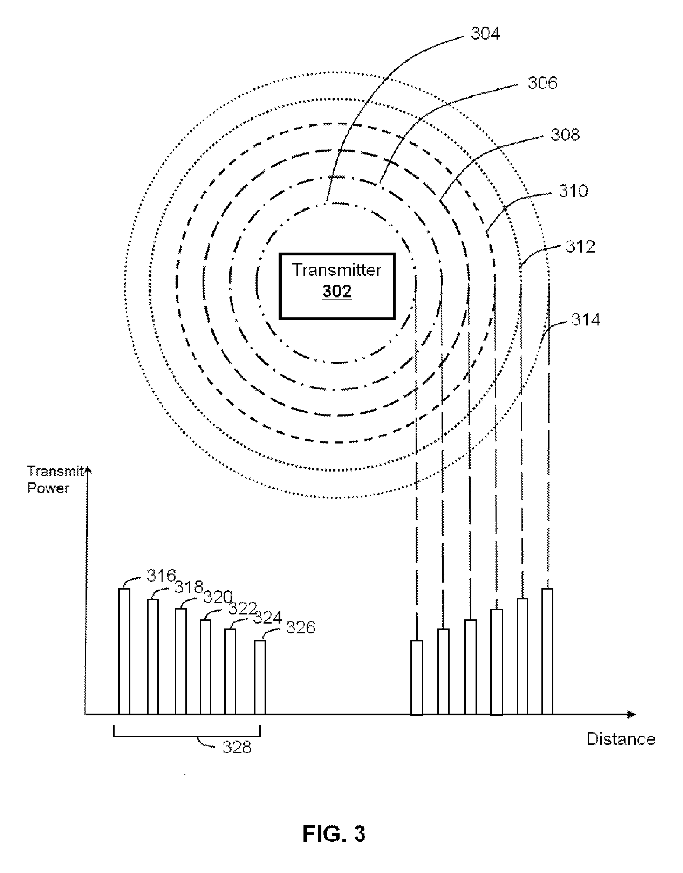

As set forth below, with respect to Figure 3, the pseudo tag signals in each sequence 110, 118, 120 of pseudo tag signals are each transmitted at a different transmission power, giving each pseudo tag signal in a sequence 110, 118, 120 a different expected coverage range. By knowing the location of each transmitter 104, 106 and 108, together with the actual, or relative, range of the pseudo tag signal transmission from each transmitter 104, 106 and 108, a trilateration calculation can be performed to determine the location of the RFID reader 102.

In one embodiment of system 100 the RFID reader 102 is a mobile RFID reader, such as a hand held terminal (HHT), held by an operator. The RFID reader 102 will generally be used in the identification of RFID tagged objects that are located within a suitable facility, such as a warehouse. The RFID reader 102 can determine which RFID tags are in the vicinity by emitting a radio frequency "ping" signal which causes nearby real RFID tags 122, 124 to transmit a real RFID signal back to the RFID reader 102 thereby indicating to the RFID reader 102 which real RFID tags 122, 124 are in the vicinity. Since real RFID tags (and especially the passive RFID tags typically used to track objects) generally have a very short range, their location is, to a good approximation, the same as the location of the reader.

Also received by the RFID reader 102, are any unique pseudo tag signals transmitted in the sequences 110, 118 and 120 of pseudo tag signals from the transmitters 104, 106 and 108 of the localization system.

In the embodiment of Figure 1, the system 100 is located within a warehouse with transmitters 104, 106 and 108 residing in known locations throughout the warehouse such that at least some portion of the sequences 110, 118, 120 of pseudo tag signals transmitted therefrom are detectable to the RFID reader 102.

In the embodiment shown in Figure 1 there are three transmitters. For the practical purpose of locating the RFID reader 102 in two dimensions in a warehouse, this is generally the minimum number of transmitters required for the operation of a trilateration based localization system. However, if, for example, the RFID reader 102 for which the location is being determined can only be located along a one-dimensional line, for example along a corridor, only one transmitter may suffice for determining the location of the RFID reader 102.

In practice there will typically be more transmitters in system 100 than the theoretical minimum necessary for calculating the location of the RFID reader 102. As a result, the system 100 will have a sufficient number of transmitters sending sequences of pseudo tag signals detectable to the RFID reader 102 at any given time in any expected permitted location for RFID reader 102. Additionally, if more than the minimum number of transmitters is detectable to the RFID reader 102, the location of the RFID reader 102 can be determined using more than one triangulation or trilateration calculations, thereby increasing the accuracy of the calculated location of the RFID reader 102.

As system 100 is expected to be typically located within a warehouse or similar environment, the environment will generally contain a plurality of items that are being stored therein. There will also generally be a plurality of fixed and movable items including, for example, shelving, internal walls, items being stored and vehicles located in the warehouse. As such, these fixed or movable items may partially or fully obstruct one or more pseudo tag signals of a sequence transmitted from a transmitter, thereby introducing some level of error into determination of the location of the RFID reader 102. The accuracy of the location determination can therefore be enhanced by increasing the number of the transmitters in the localization system, positioning the transmitters of the location system in more suitable (for RF transmission purposes) positions, performing a plurality of triangulation calculations based on sequences of pseudo tag signals received from more than three transmitters, giving certain transmitters more weight when performing triangulation calculations and/or creating a rolling average of the location of the RFID reader and using logic to discredit inaccurate location calculations. Some of these options will be discussed, in more detail, below.

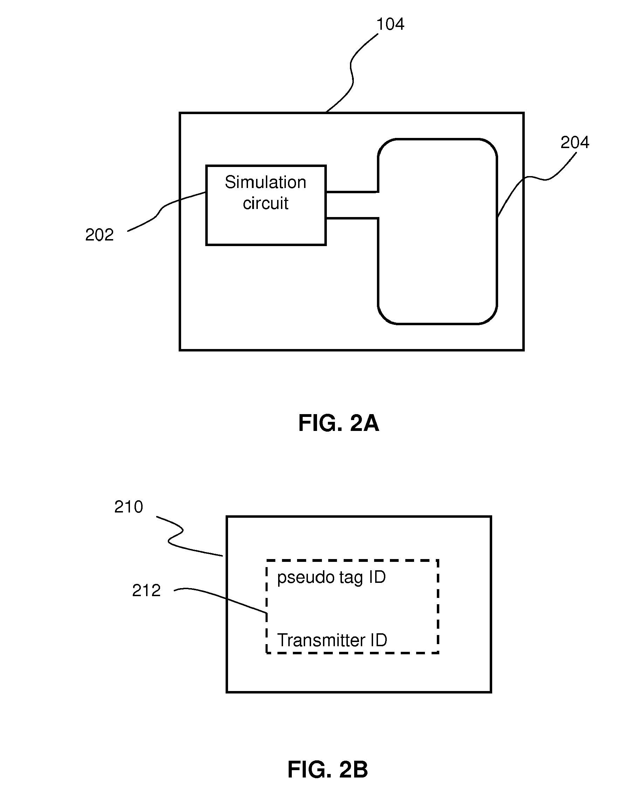

Figure 2A is a block diagram of the transmitter 104, and it will be apparent that transmitter 104 is a representative example of transmitters 106, 108 and other transmitters that transmit sequences of pseudo tag signals within system 100. Transmitter 104 includes a simulation circuit 202 and an antenna 204. The simulation circuit 202 simulates a plurality of RFID tags and transmits a sequence comprising each of these pseudo RFID tag signals through the antenna 204. An RFID reader 102 within transmission range of the transmitter 104 will receive one or more of these pseudo RFID tag signals from the transmitted sequence.

Figure 2B is a block diagram of a pseudo tag 210 that is, for example, implemented in and transmitted by the transmitter 104. It is noted that the pseudo tag 210 is not a physical entity but rather a representation of the data structure of an RFID tag that is generated by the simulation circuit 202.

The pseudo tag 210 has information 212 associated therewith. This information 212 may be stored in the simulation circuit 202 and information 212 includes a unique transmitter identification value (Transmitter ID) and a pseudo tag identification (pseudo tag ID), wherein these two parameters combine to create a unique parameter, or identity, which the RFID reader 102 can receive and recognize and use in a triangulation or trilateration calculation. Additional information can be included in information 212 to facilitate distinguishing pseudo tag signals from real tag signals as necessary.

In one example, the Transmitter ID is 4, the pseudo tag ID is 99 and a distinguisher value of 9990000000 is used. These ID values can be combined to produce, for example, a unique tag parameter of 9990000000 + (4 * 256 ) + 99 = 9990001123. As described below, in some embodiments the location of the transmitter 104 can be stored in the RFID reader 102, while in other embodiments the transmitter location can be stored as part of the information 212. In the latter case, the transmitter 104 then transmits its location as part of the sequence of pseudo tag signals it transmits.

Referring now to Figure 3, a transmitter 302, which is a pseudo tag transmitter for use in system 100, transmits each pseudo tag signal 304, 306, 308, 310, 312 of the sequence of pseudo tag signals using a different level of transmit power 326, 324, 322, 320, 318, 316 respectively, thereby forming a sequence 328 of unique pseudo tag signals 304, 306, 308, 310, 312.

The number of pseudo tag signals within a sequence of pseudo tag signals that will be detectable by an RFID reader is inversely proportional to the distance of the RFID reader from the transmitter. For example, transmitter 302 can transmit a sequence of successive pseudo tags, each of which is transmitted at a power level such that it is intended to be detectable two meters further away than the preceding pseudo tag in the sequence. If the transmitter 302 sends fifty pseudo RFID tag signals, the RFID reader 102 would need to be within one hundred metres of the transmitter 302 to properly receive at least one pseudo tag (i.e. - the pseudo tag signal transmitted with the highest level of transmit power) of the transmitted sequence of fifty. If RFID receiver 102 were within ten metres of the transmitter 302, it would receive at least forty-five pseudo RFID tag signals from the transmitted sequence of fifty pseudo RFID tag signals.

Transmitter 302 can be powered, for example, by an external, or wired, power supply to eliminate any operating lifetime or maintenance issues that would be associated with an internal power source. However, as will be apparent to those of skill in the art, many RFID readers are quite sensitive with respect to their ability to detect RF signals, so that the transmission power of transmitter 302 can be relatively small. Thus, it is contemplated that transmitter 302 can be battery powered, if desired, and should have a reasonable expected operating lifetime under such circumstances.

The number of pseudo tags associated with a given transmitter 302 and transmitted in the sequence of pseudo tag signals can be configurable from transmitter to transmitter and is a function of the location of a transmitter with regard to the possible location of RFID readers for which it is desired to determine the location. The number is also a function of the resolution required for determining the location of a RFID reader, and the limitations of how many RFID tags an RFID can read at a time. For example, each of the transmitters 104, 106 and 108 may simulate fifty pseudo RFID tag signals.

As will be apparent to those of skill in the art, to determine its location, an RFID reader 102 will receive at least portions of the sequences of pseudo tag signals transmitted by transmitters in the vicinity of RFID reader 102 and these received portions will, as described below, be used to determine the location of RFID reader 102.

In one embodiment of the present invention, herein referred to as the reader-calculating embodiment, the determination of the location of RFID reader 102 is performed in the RFID reader 102. In another embodiment of the present invention, herein referred to as the server-calculating embodiment, the RFID reader 102 sends the data from the received pseudo RFID tags, and any real RFID tags, to another computer with which it is in communication, for example by WiFi or cellular data services. The other computer would typically be a server in the warehouse, or other location, and this server would then perform the necessary calculations and processing to determine the location of the RFID reader 102.

While the server-calculating embodiment reduces the amount of computation that would have to be performed in RFID reader 102 compared to the reader-calculating embodiment, the server-calculating embodiment can introduce a delay by having to transfer the stored information from RFID reader 102 to the remote server. However, the server-calculating embodiment allows for a less capable computational system (and therefore less expensive) to be employed in RFID reader 102 and, as RFID reader 102 does not have to perform the necessary calculations and processing, it may also experience reduced power consumption (and hence a longer battery life).

In both the reader-calculating and server-calculating embodiments, the RFID reader 102 can let the user know whether or not a location had been determined successfully by, for example, beeping, vibrating and/or displaying a suitable notice on a display screen. If the location could not be determined, a rescan could be attempted with RFID reader 102 to again acquire portions of the sequences of pseudo tag signals from transmitters in the vicinity for use re-calculating the location of the RFID reader.

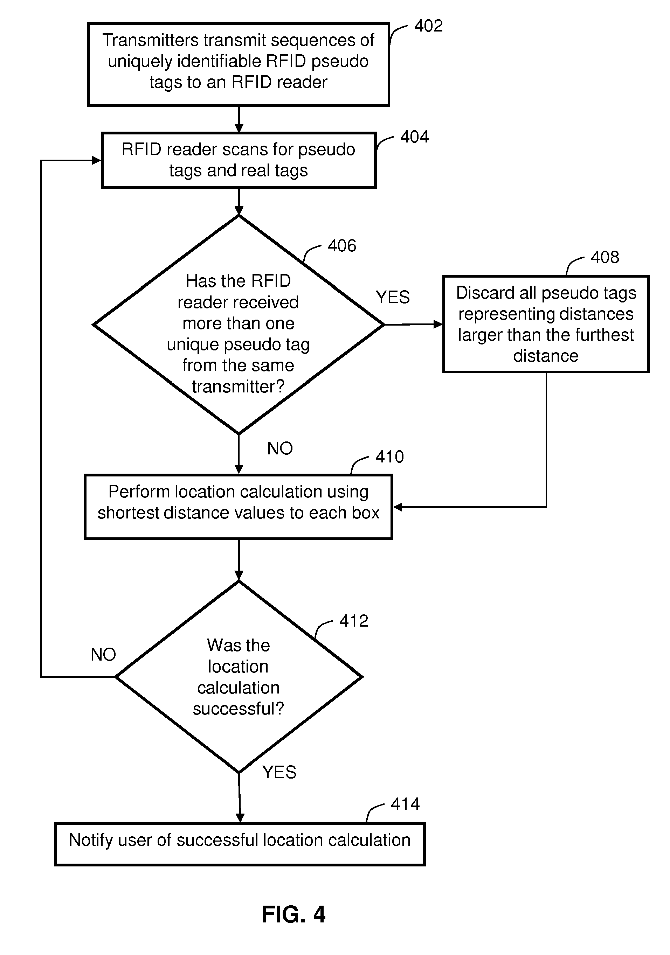

Figure 4 is a flowchart of a method of localization of an RFID reader according to the present invention. In this embodiment, transmitters, such as transmitters 104, 106 and 108 of Figure 1 will continuously transmit a repeated sequence of pseudo tag signals at regular intervals in step 402. This sequence of pseudo tag signals is continuously repeated, as the ping signal sent by the RFID reader 102 to activate the real RFID tags is unlikely to be detected by the transmitters.

At step 404 the RFID reader 102 scans for signals from both the pseudo tags and the real tags. The RFID reader 102 receives signals from one or more real tags that were within range to receive the ping signal and additionally receives the pseudo tags transmitted by the transmitters within range. The RFID reader 102 will receive these signals each time it does a scan.

If the RFID reader 102 is close to a particular transmitter, it might receive almost all of the pseudo tag signals in the sequence sent from that transmitter. If it is farther away it might only receive a few pseudo tag signals of the sequence sent by that transmitter. Thus, the distance between the RFID reader 102 and a transmitter can be determined based on the pseudo tag ID that is detected which corresponds to the pseudo tag having the shortest range and thus it is preferable (but not essential) that a direct relationship be employed for assigning pseudo tag IDs and their transmitter power/distance. For example, the pseudo tag signal transmitted with the lowest transmit power level can be assigned an ID of one, and the pseudo tag signal transmitted with the next lowest transmit power level can be assigned an ID of two, etc. Alternatively, the pseudo tag IDs can contain data representing an expected transmission range for the respective pseudo tag (derived from the transmit power used to transmit the pseudo tag signal) or an actual distance (previously empirically obtained when the transmitter was installed and then programmed into the respective pseudo tag).

At step 404, the RFID reader 102 will continue to scan for an additional small period of time, gathering as many pseudo tag signals from as many transmitters as it can.

At step 406, the RFID reader 102 then determines if more than one pseudo tag has been received from a single transmitter in step 406.

If more than one pseudo tag signal from at least one transmitter has been received, then at step 408 for each transmitter 408 RFID reader 102 discards all pseudo tags signals received from that transmitter, except for the weakest pseudo tag or the pseudo tag representing the smallest range from the transmitter.

The distance between the RFID reader 102 and each transmitter from which at least one pseudo tag signal was received is determined at step 410. Specifically, the RFID reader 102 determines the range values from each of the pseudo tags from the individual transmitters and uses those determined values as the input to one or more suitable triangulation or trilateration algorithms.

As mentioned above, in the reader-calculating embodiment the RFID reader 102 performs the calculations and processing, using the known locations of the transmitters from which the pseudo tag signals were received, as stored in the RFID reader 102 or otherwise available to it, to determine the location. In the server-calculating embodiment, the RFID reader 102 transmits the range values, and the identity of the transmitters from which it was received, to the server which performs the calculations and processing, also using the known locations of the transmitters, to determine the location of the RFID reader 102.

At step 412 a determination is made as to whether the location determination was successful and, if it was, at step 414 an indication to that effect is provided to RFID reader 102 (and/or its user). If, at step 412, it is determined that the location determination was not successful, then the method can return to step 404 and re-attempt the process.

It is worth noting that in some embodiments, the data in pseudo tag ID can represent a relative distance, not an absolute one, so there is no need for any real calibration of this system. For example, if the weakest tag detectable from three separate transmitters is "10", the RFID reader 102 is equidistant from each of them. The actual distance represented by the tag ID is not important as one can compute absolute location just by knowing the absolute locations of the transmitters and their relative distances to the RFID reader 102.

In one embodiment the pseudo tag signals from a transmitter are transmitted using a sequence having a granularity (of distance) from coarse to fine. A coarse set is transmitted first, then increasingly fine sets of intermediate distances are transmitted in successive passes.

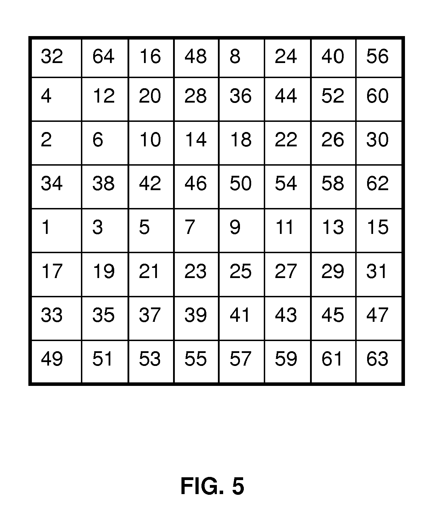

Figure 5 shows an exemplary embodiment of an embodiment employing an increasing granularity transmission scheme. In this embodiment, the transmitter sends sixty-four tags in a sequence and an illustrative ordering is: 32; 64; 16; 48; 8; 24; 40; 56; 4;12; 20; 28; ...; 2; 6; 10; ...; 1; 3; 5; 7; 9; ... ; etc. In other words, every 32^{nd} tag is sent first, then every 16^{th} tag, then every 8^{th} tag and so on up to every 2^{nd} tag.

This approach allows an RFID reader to stop processing scans as soon as it received the pseudo RFID tag signal with the resolution it needed, for example, if the RFID reader only needed location accuracy to +/-8 units, then it could stop scanning and start computing as soon as it receives a RFID tag signal that is a multiple of 4, since the last pseudo tag it saw was a multiple of 8 . This should also reduce intra-transmitter interference.

In a simpler alternative illustrative embodiment, a transmitter can transmit the pseudo tag signals in order of increasing magnitude. In this case the first signal from a transmitter that is detectable to a RFID reader is the one to be used in the location calculation in step 410.

No calibration of the system is required if the power difference between each successive pseudo tag in a sequence is substantially equal for each transmitter.

It should be apparent to a person skilled in the art that many approaches can be used to compensate the needed location correction when the RFID reader 102 is moving about or obscured. Two correction methods are briefly described here.

In the first method, the location information of the RFID reader is accumulated over time using a rolling average. The method looks at the locational history of the RFID reader 102 and uses this as a parameter when determining what the present location is. Therefore, if the RFID reader has been in the same location over the past several determinations it is likely that it is still in the same location. Thus, the temporary obscuring of a transmitter can handled if it is found that the location to the other transmitters has remained the same.

Further, if an operator that is on foot is holding the RFID reader, it is reasonable to limit the maximum possible change in distance of the RFID reader to that associated with a speed of about 4 km/h. A similar set of assumptions, with different assumed speeds, can be employed if the RFID reader is mounted to a forklift or other motorized vehicle.

A second approach to improve the accuracy of the determined location is to provide a weighting to the transmitters in the location calculation such that proximate transmitters are assumed to be more accurate than distant ones. A site-specific weighting may also be applied in some cases. This is most useful when there are more transmitters detectable than the minimum number required for the location determination as some transmitters will be located in plain sight whilst others could be prone to being obscured.

In all of the above examples, each transmitter must transmit the sequence of pseudo tag signals in such a way that an RFID reader sees the output pseudo tag signals as a set of standard tags i.e. there are a number of different proprietary formats including a UPC/EAN standardized format. The reception of the sequence of pseudo tag signals should not obscure the reception of data from real tags on the objects being tracked, as the normal back-off strategy will not be available with the pseudo tags, and the RFID reader's ping signal is almost certainly too weak to be used as a trigger to the transmitter, so the pseudo tag transmitter will have to transmit almost continuously.

Where a modern RFID tag reader, able to handle almost a thousand scans a second, is used the transmitter can send a burst sequence (lasting about 50 ms) a few times a second to ensure that real tags can still be received.

As a further precaution so as to not overload the RFID reader with information, the transmitters can be designed to communicate with each other and co-ordinate their activities. This co-ordination ensures that the transmitters do not all transmit at the same time. There are a number of ways of achieving this coordination, and one simple option is for each transmitter to radiate a low-frequency signal indicating to the other transmitters when it is going to transmit. On receipt of such a signal, a transmitter should try to ensure its own transmission does not occur at the same time as that of the other transmitter.

The present invention has been described with regard to a plurality of illustrative embodiments. However, it will be apparent to persons skilled in the art that a number of variations and modifications can be made without departing from the scope of the invention as defined in the claims.

Embodiments within the scope of the present invention can be implemented in digital electronic circuitry, or in computer hardware, firmware, software, or in combinations thereof. Apparatus within the scope of the present invention can be implemented in a computer program product tangibly embodied in a machine-readable storage device for execution by a programmable processor; and method actions within the scope of the present invention can be performed by a programmable processor executing a program of instructions to perform functions of the invention by operating on input data and generating output. Suitable processors include, by way of example, both general and special purpose microprocessors. Generally, a processor will receive instructions and data from a read-only memory and/or a random access memory. Any of the foregoing can be supplemented by, or incorporated in, ASICs (application-specific integrated circuits).

## Claims

1. A system (100) for determining a location of an RFID reader, the system comprising:
at least three transmitters (104,106,108; 302) having known reference locations and each arranged to transmit signals including a transmitter identification value identifying the respective transmitter (104,106,108,302);
an RFID reader (102) for receiving signals from the transmitters (104,106,108; 302) and for distinguishing between received signals; and
a location calculator for determining the location of the RFID reader (102);
**characterised in that** each said transmitter comprises a simulation circuit for simulating a plurality of RFID tags, the simulation circuit arranged to transmit:
(a) a sequence (110,118,120,328) of unique RFID pseudo tag signals (304,306,308, 310,312), each unique RFID pseudo tag signal in the sequence (110,118,120,328) having a unique range of transmission;
(b) tag identification data indicating the range of transmission of the respective RFID pseudo tag signal; and
(c) a transmitter identification value identifying the transmitter (104,106,108,302) transmitting the RFID pseudo tag signal;
the RFID reader (102) being arranged to distinguish between each unique RFID pseudo tag signal received to determine the received RFID pseudo tag signal with the shortest range of transmission from each respective transmitter and the location calculator being arranged to determine (410) the location of the RFID reader (102) based on the shortest range of transmission of the received RFID pseudo tag identification data and the received transmitter identification values.

2. The system (100) according to claim 1, wherein each unique RFID pseudo tag signal in a sequence (110,118,120,328) is transmitted with a progressively weaker transmission power level (326, 324, 322, 320, 318, 316) such that the number of unique RFID pseudo tags received by the RFID reader (102) is inversely proportional to its distance from the transmitter.

3. The system (100) according to claim 1 or 2, where the location calculator employs a weighted determination of the location wherein a greater weight is applied to the received unique RFID pseudo tag signals (304,306,308, 310,312) having an indicated shorter range of transmission relative to those received unique RFID pseudo tag signals (304,306,308, 310,312) having an indicated longer range of transmission.

4. The system (100) according to any preceding claim wherein the location calculator accumulates location information over time using a rolling average to generate a locational history and that locational history is used as a factor in determining a current location of the RFID reader (102).

5. The system (100) according to any preceding claim, which comprises at least four transmitters (104,106,108; 302) and wherein a plurality of trilateration calculations are performed using received RFID pseudo signals from the at least four transmitters (104,106,108; 302) to determine the location of the RFID reader (102) based on the received tag identifications and the transmitter identification values.

6. The system (100) according to any preceding claim, wherein the location calculator is located in a server computer remote from the RFID reader (102) and the tag identification and the transmitter identification value of received RFID pseudo tag signals (304,306,308, 310,312) are transmitted from the RFID reader (102) to the location calculator in the server computer.

7. The system (100) according to claim 6 wherein the known locations for each of the at least three transmitters (104,106,108; 302) are stored at the server computer.

8. The system (100) according to any of claims 1 to 5 wherein the location calculator is in the RFID reader (102).

9. The system (100) according to any preceding claim wherein the tag identification data indicating the range of transmission of the respective RFID pseudo tag signal expresses the range data on a relative basis.

10. A method of determining the location of an RFID reader (102), the method comprising:
transmitting (402) signals from at least three transmitters (104, 106, 108; 302), the signals including a transmitter identification value indicating the transmitter from which the respective signal is transmitted, each transmitter having a known reference location;
receiving (406) at an RFID reader (102) signals from the at least three transmitters (104,106,108; 302) and distinguishing between the received signals; and
determining (410) the location of the RFID reader (102) based on the plurality of the signals received by the RFID reader (102), **characterised in that**:
the signals from each transmitter simulate a plurality of RFID tags, the signals from each transmitter including:
a) a sequence (110,118,120, 328) of unique RFID pseudo tag signals (304, 306, 308, 310,312), each unique RFID pseudo tag signal in the sequence (110,118,120,328) having a unique range of transmission;
b) tag identification data indicating the range of transmission of the respective RFID pseudo tag signal; and
c) a transmitter identification value identifying the transmitter transmitting the RFID pseudo tag signal;
the method comprising distinguishing between each unique RFID pseudo tag signal received, determining the received RFID pseudo tag signal with the shortest range of transmission from each respective transmitter, and determining (410) the location of the RFID reader (102) based on the shortest range of transmission of the received RFID pseudo tag identification data and the received transmitter identification values.

11. The method according to claim 10, wherein each unique RFID pseudo tag in the sequence (110,118,120,328) is transmitted with a progressively weaker transmission power level (326, 324, 322, 320, 318, 316) and therefore a progressively decreased range of transmission such that the number of unique RFID pseudo tag signals (304,306,308, 310,312) received by the RFID reader (102) is inversely proportional to the distance of the RFID reader (102) from the respective transmitter.

12. The method according to claim 10 or 11, further comprising:
applying a greater weight in the location determination of RFID pseudo tags received by the RFID reader (102) from transmitters (104,106,108; 302) which are closer in distance to the RFID reader (102) than RFID pseudo tags received by the RFID reader (102) from transmitters (104,106,108;302) which are located farther from the RFID reader (102).

13. The method according to any of claims 10 to 12, which further comprises
accumulating location information for the RFID reader (102) over time using a rolling average to generate a locational history for the RFID reader (102); and
employing the generated locational history for the RFID reader (102) as a factor in determining the current location of the RFID reader (102).

## Patentansprüche

1. System (100) zur Bestimmung eines Standortes eines RFID-Lesegerätes, wobei das System umfasst:
mindestens drei Sender (104, 106, 108; 302), die über bekannte Referenzstandorte verfügen, wobei jeder geeignet ist, Signale zu übertragen, die einen Senderidentifikationswert umfassen, der den jeweiligen Sender (104, 106, 108, 302) identifiziert;
ein RFID-Lesegerät (102) zum Empfangen von Signalen von den Sendern (104, 106, 108; 302) und zur Unterscheidung zwischen empfangenen Signalen; und
einen Standortrechner zur Bestimmung des Standortes des RFID-Lesegerätes (102);
**dadurch gekennzeichnet, dass** jeder der Sender eine Simulationsschaltung zur Simulation einer Mehrzahl von RFID-Tags umfasst, wobei die Simulationsschaltung geeignet ist, Folgendes zu übertragen:
(a) eine Sequenz (110, 118, 120, 328) von eindeutigen RFID-Pseudotagsignalen (304, 306, 308, 310, 312), wobei jedes eindeutige RFID-Pseudotagsignal in der Sequenz (110, 118, 120, 328) über einen eindeutigen Übertragungsbereich verfügt;
(b) Tag-Identifikationsdaten, die den Übertragungsbereich des jeweiligen RFID-Pseudotagsignals anzeigen; und
(c) einen Senderidentifikationswert, der den Sender (104, 106, 108, 302) identifiziert, der das RFID-Pseudotagsignal überträgt;
wobei das RFID-Lesegerät (102) geeignet ist, zwischen jedem empfangenen eindeutigen RFID-Pseudotagsignal zu unterscheiden, um das empfangene RFID-Pseudotagsignal mit dem kleinsten Übertragungsbereich von jedem entsprechenden Sender zu bestimmen, und der Standortrechner geeignet ist, den Standort des RFID-Lesegerätes (102), basierend auf dem kleinsten Übertragungsbereich der empfangenen RFID-Pseudotagidentifikationsdaten und der empfangenen Senderidentifikationswerte, zu bestimmen (410).

2. System (100) gemäß Anspruch 1, wobei jedes eindeutige RFID-Pseudotagsignal in einer Sequenz (110, 118, 120, 328) mit einem zunehmend schwächeren Übertragungsleistungspegel (326, 324, 322, 320, 318, 316) übertragen wird, so dass die Zahl der durch das RFID-Lesegerät (102) empfangenen eindeutigen RFID-Pseudotags umgekehrt proportional zu seiner Entfernung von dem Sender ist.

3. System (100) gemäß Anspruch 1 oder 2, wobei der Standortrechner eine gewichtete Bestimmung des Standortes einsetzt, wobei ein größeres Gewicht auf die empfangenen eindeutigen RFID-Pseudotagsignale (304, 306, 308, 310, 312) angewendet wird, die über einen angezeigten kleineren Übertragungsbereich verfügen, relativ zu solchen empfangenen eindeutigen RFID-Pseudotagsignalen (304, 306, 308, 310, 312), die über einen angezeigten größeren Übertragungsbereich verfügen.

4. System (100) gemäß einem der vorangehenden Ansprüche, wobei der Standortrechner, unter Verwendung eines gleitenden Durchschnitts, im Laufe der Zeit Standortinformationen sammelt, um eine Standortgeschichte zu erzeugen, und diese Standortgeschichte als ein Faktor verwendet wird, um einen aktuellen Standort des Lesegerätes (102) zu bestimmen.

5. System (100) gemäß einem der vorangehenden Ansprüche, das mindestens vier Sender (104, 106, 108; 302) umfasst, und wobei, unter Verwendung von empfangenen RFID-Pseudosignalen von den mindestens vier Sendern (104, 106, 108; 302), eine Mehrzahl von Trilaterationsberechnungen durchgeführt werden, um den Standort des RFID-Lesegerätes (102), basierend auf den empfangenen Tag-Identifikationen und den Senderidentifikationswerten, zu bestimmen.

6. System (100) gemäß einem der vorangehenden Ansprüche, wobei der Standortrechner in einem Server angeordnet ist, der entfernt in dem RFID-Lesegerät (102) angeordnet ist, und die Tag-Identifikation und der Senderidentifikationswert der empfangenen RFID-Pseudotagsignale (304, 306, 308, 310, 312) von dem RFID-Lesegerät (102) an den Standortrechner in dem Server übertragen werden.

7. System (100) gemäß Anspruch 6, wobei die bekannten Standorte für jeden der mindestens drei Sender (104, 106, 108; 302) bei dem Server gespeichert werden.

8. System (100) gemäß einem der Ansprüche 1 bis 5, wobei sich der Standortrechner in dem RFID-Lesegerät (102) befindet.

9. System (100) gemäß einem der vorangehenden Ansprüche, wobei die Tag-Identifikationsdaten, die den Übertragungsbereich des jeweiligen RFID-Pseudotagsignals anzeigen, die Bereichdaten auf einer relativen Basis ausdrücken.

10. Verfahren zur Bestimmung des Standortes eines RFID-Lesegerätes (102), wobei das Verfahren umfasst:
Übertragen (402) von Signalen von mindestens drei Sendern (104, 106, 108; 302), wobei die Signale einen Senderidentifikationswert umfassen, der den Sender anzeigt, von dem das jeweilige Signal übertragen wird, wobei jeder Sender über einen bekannten Referenzstandort verfügt;
Empfangen (406), bei einem RFID-Lesegerät (102), von Signalen von den mindestens drei Sendern (104, 106, 108; 302) und Unterscheiden zwischen den empfangenen Signalen; und
Bestimmen (410) des Standortes des RFID-Lesegerätes (102), basierend auf der Mehrzahl von durch das RFID-Lesegerät (102) empfangenen Signalen, **dadurch gekennzeichnet, dass**:
die Signale von jedem Sender eine Mehrzahl von RFID-Tags simulieren, wobei die Signale von jedem Sender umfassen:
a) eine Sequenz (110, 118, 120, 328) von eindeutigen RFID-Pseudotagsignalen (304, 306, 308, 310, 312), wobei jedes eindeutige RFID-Pseudotagsignal in der Sequenz (110, 118, 120, 328) über einen eindeutigen Übertragungsbereich verfügt;
b) Tag-Identifikationsdaten, die den Übertragungsbereich des jeweiligen RFID-Pseudotagsignals anzeigen; und
c) einen Senderidentifikationswert, der den Sender identifiziert, der das RFID-Pseudotagsignal überträgt;
wobei das Verfahren umfasst: Unterscheiden zwischen jedem empfangenen eindeutigen RFID-Pseudotagsignal, Bestimmen des empfangenen RFID-Pseudotagsignals mit dem kleinsten Übertragungsbereich von jedem jeweiligen Sender, und Bestimmen (410) des Standortes des RFID-Lesegerätes (102), basierend auf dem kleinsten Übertragungsbereich der empfangenen RFID-Pseudotagidentifikationsdaten und der empfangenen Senderidentifikationswerte.

11. Verfahren gemäß Anspruch 10, wobei jedes eindeutige RFID-Pseudotag in der Sequenz (110, 118, 120, 328) mit einem zunehmend schwächeren Übertragungsleistungspegel (326, 324, 322, 320, 318, 316) und damit einem zunehmend kleineren Übertragungsbereich übertragen wird, so dass die Zahl von eindeutigen RFID-Pseudotagsignalen (304, 306, 308, 310, 312), die durch das RFID-Lesegerät (102) empfangen werden, umgekehrt proportional zu dem Abstand des RFID-Lesegerätes (102) von dem jeweiligen Sender ist.

12. Verfahren gemäß Anspruch 10 oder 11, das weiterhin umfasst:
Anwenden eines größeren Gewichtes in der Standortbestimmung von RFID-Pseudotags, die durch das RFID-Lesegerätes (102) von Sendern (104, 106, 108; 302) empfangen werden, die in einem geringeren Abstand zu dem RFID-Lesegerät (102) angeordnet sind, als RFID-Pseudotags, die durch das RFID-Lesegerät (102) von Sendern (104, 106, 108; 302) empfangen werden, die in einem größeren Abstand zu dem RFID-Lesegerät (102) angeordnet sind.

13. Verfahren gemäß einem der Ansprüche 10 bis 12, das weiterhin umfasst:
Sammeln von Standortinformationen für das RFID-Lesegerät (102) über die Zeit, unter Verwendung eines gleitenden Durchschnitts, um eine Standortgeschichte des RFID-Lesegerätes (102) zu erzeugen; und
Einsetzen der erzeugten Standortgeschichte für das RFID-Lesegerät (102) als einen Faktor zur Bestimmung des aktuellen Standortes des RFID-Lesegerätes (102).

## Revendications

1. Système (100) pour déterminer une localisation d'un lecteur RFID, le système comprenant :
au moins trois émetteurs (104, 106, 108 ; 302) ayant des localisations de référence connues et chacun agencé pour émettre des signaux comprenant une valeur d'identification d'émetteur identifiant l'émetteur respectif (104, 106, 108, 302) ;
un lecteur RFID (102) pour recevoir des signaux en provenance des émetteurs (104, 106, 108 ; 302) et pour faire la distinction entre les signaux reçus ; et
un calculateur de localisation pour déterminer la localisation du lecteur RFID (102) ;
**caractérisé en ce que** chaque dit émetteur comprenant un circuit de simulation pour simuler une pluralité d'étiquettes RFID, le circuit de simulation agencé pour transmettre :
(a) une séquence (110, 118, 120, 328) de signaux de pseudo étiquettes RFID uniques (304, 306, 308, 310, 312), chaque signal de pseudo étiquette RFID unique dans la séquence (110, 118, 120, 328) ayant une portée d'émission unique ;
(b) des données d'identification d'étiquette indiquant la portée d'émission du signal de pseudo étiquette RFID respectif ; et
(c) une valeur d'identification d'émetteur identifiant l'émetteur (104, 106, 108, 302) émettant le signal de pseudo étiquette RFID ;
le lecteur RFID (102) étant agencé pour faire la distinction entre chaque signal de pseudo étiquette RFID unique reçu pour déterminer le signal de pseudo étiquette RFID reçu avec la plus courte portée d'émission en provenance de chaque émetteur respectif et le calculateur de localisation étant agencé pour déterminer (410) la localisation du lecteur RFID (102) sur la base de la plus courte portée d'émission des données d'identification de pseudo étiquette RFID reçues et des valeurs d'identification d'émetteur reçues.

2. Système (100) selon la revendication 1, dans lequel chaque signal de pseudo étiquette RFID unique dans une séquence (110, 118, 120, 328) est émis avec un niveau de puissance d'émission progressivement plus faible (326, 324, 322, 320, 318, 316) de sorte que le nombre de pseudo étiquettes RFID uniques reçues par le lecteur RFID (102) soit inversement proportionnel à sa distance de l'émetteur.

3. Système (100) selon la revendication 1 ou 2, dans lequel le calculateur de localisation emploie une détermination pondérée de la localisation où un poids plus grand est appliqué aux signaux de pseudo étiquettes RFID uniques reçus (304, 306, 308, 310, 312) ayant une portée d'émission plus courte indiquée par rapport à ces signaux de pseudo étiquettes RFID uniques reçus (304, 306, 308, 310, 312) ayant une portée d'émission plus longue indiquée.

4. Système (100) selon l'une quelconque des revendications précédentes, dans lequel le calculateur de localisation accumule des informations de localisation dans le temps en utilisant une moyenne mobile pour générer un historique de localisation et cet historique de localisation est utilisé en tant que facteur dans la détermination d'une localisation actuelle du lecteur RFID (102).

5. Système (100) selon l'une quelconque des revendications précédentes, qui comprend au moins quatre émetteurs (104, 106, 108 ; 302) et dans lequel une pluralité de calculs de trilatération sont effectués en utilisant des pseudo signaux RFID reçus en provenance des au moins quatre émetteurs (104, 106, 108 ; 302) pour déterminer la localisation du lecteur RFID (102) sur la base des identifications d'étiquette reçues et des valeurs d'identification d'émetteur.

6. Système (100) selon l'une quelconque des revendications précédentes, dans lequel le calculateur de localisation est situé dans un ordinateur serveur distant du lecteur RFID (102) et l'identification d'étiquette et la valeur d'identification d'émetteur de signaux de pseudo étiquettes RFID reçus (304, 306, 308, 310, 312) sont transmises du lecteur RFID (102) au calculateur de localisation dans l'ordinateur serveur.

7. Système (100) selon la revendication 6, dans lequel les localisations connues pour chacun des au moins trois émetteurs (104, 106, 108 ; 302) sont stockées au niveau de l'ordinateur serveur.

8. Système (100) selon l'une quelconque des revendications 1 à 5, dans lequel le calculateur de localisation se trouve dans le lecteur RFID (102).

9. Système (100) selon l'une quelconque des revendications précédentes, dans lequel les données d'identification d'étiquette indiquant la portée d'émission du signal de pseudo étiquette RFID respectif expriment les données de portée sur une base relative.

10. Procédé de détermination de la localisation d'un lecteur RFID (102), le procédé comprenant :
l'émission (402) de signaux depuis au moins trois émetteurs (104, 106, 108 ; 302), les signaux comprenant une valeur d'identification d'émetteur indiquant l'émetteur depuis lequel le signal respectif est émis, chaque émetteur ayant une localisation de référence connue ;
la réception (406) au niveau d'un lecteur RFID (102) de signaux en provenance des au moins trois émetteurs (104, 106, 108 ; 302) et la distinction entre les signaux reçus ; et
la détermination (410) de la localisation du lecteur RFID (102) sur la base de la pluralité des signaux reçus par le lecteur RFID (102), **caractérisé en ce que** :
les signaux en provenance de chaque émetteur simulent une pluralité d'étiquettes RFID, les signaux en provenance de chaque émetteur comprenant :
(a) une séquence (110, 118, 120, 328) de signaux de pseudo étiquettes RFID uniques (304, 306, 308, 310, 312), chaque signal de pseudo étiquette RFID unique dans la séquence (110, 118, 120, 328) ayant une portée d'émission unique ;
(b) des données d'identification d'étiquette indiquant la portée d'émission du signal de pseudo étiquette RFID respectif ; et
(c) une valeur d'identification d'émetteur identifiant l'émetteur émettant le signal de pseudo étiquette RFID ;
le procédé comprenant la distinction entre chaque signal de pseudo étiquette RFID unique reçu, la détermination du signal de pseudo étiquette RFID reçu avec la plus courte portée d'émission en provenance de chaque émetteur respectif, et la détermination (410) de la localisation du lecteur RFID (102) sur la base de la plus courte portée d'émission des données d'identification de pseudo étiquette RFID reçues et des valeurs d'identification d'émetteur reçues.

11. Procédé selon la revendication 10, dans lequel chaque pseudo étiquette RFID unique dans la séquence (110, 118, 120, 328) est émise avec un niveau de puissance d'émission progressivement plus faible (326, 324, 322, 320, 318, 316) et par conséquent une portée d'émission progressivement diminuée de sorte que le nombre de signaux de pseudo étiquettes RFID uniques (304, 306, 308, 310, 312) reçus par le lecteur RFID (102) soit inversement proportionnel à la distance du lecteur RFID (102) de l'émetteur respectif.

12. Procédé selon la revendication 10 ou 11, comprenant en outre :
l'application d'un poids plus grand dans la détermination de localisation de pseudo étiquettes RFID reçues par le lecteur RFID (102) en provenance d'émetteurs (104, 106, 108 ; 302) qui sont plus proches en distance du lecteur RFID (102) que des pseudo étiquettes RFID reçues par le lecteur RFID (102) en provenance d'émetteurs (104, 106, 108 ; 302) qui sont situés plus loin du lecteur RFID (102).

13. Procédé selon l'une quelconque des revendications 10 à 12, qui comprend en outre
l'accumulation d'informations de localisation pour le lecteur RFID (102) dans le temps en utilisant une moyenne mobile pour générer un historique de localisation pour le lecteur RFID (102) ; et
l'emploi de l'historique de localisation généré pour le lecteur RFID (102) en tant que facteur dans la détermination de la localisation actuelle du lecteur RFID (102).
